# EUROPEAN PATENT APPLICATION

(11) **EP 1 980 897 A1**
(43) Date of publication of application: **15.10.2008**
(21) Application number: 07707080.3
(22) Date of filing: 19.01.2007
(51) Int. Cl.: G02F 1/133, G09G 3/20, G09G 3/36

(54) **DISPLAY DEVICE AND ELECTRONIC APPARATUS**

(30) Priority: 20.01.2006 JP 2006013127
(71) Applicant: Sony Corporation, Minato-ku Tokyo (JP)
(72) Inventor: TONOGAI, Masaaki, Minato-Ku Tokyo (JP); NAKAJIMA, Yoshiharu, Minato-Ku Tokyo (JP); KIDA, Yoshitoshi, Minato-Ku Tokyo (JP); MURASE, Masaki, Minato-Ku Tokyo (JP); ITO, Daisuke, Minato-Ku Tokyo (JP)
(74) Representative: Thévenet, Jean-Bruno
(86) International application number: PCT/JP2007/050792
(87) International publication number: WO 2007/083744

(57) **Abstract**

A display device of a type capable of narrowing the pitch, realizing narrowing of the frame, and further lowering the power consumption and an electronic device using the device, wherein two horizontal drive circuits 13U and 13D employ an RGB selector scheme by storing three digital data in sampling and latch circuits, performing conversion processing to analog data three times by a common digital-to-analog conversion circuit during one horizontal period (H), selecting three analog data in the horizontal period in a time division manner, and outputting the same to data lines (signal lines).

## Description

### TECHNICAL FIELD

The present invention relates to a liquid crystal display device or other active matrix type display device and an electronic device using the device.

### BACKGROUND ART

In recent years, mobile phones, PDA (personal digital assistants), and other portable terminals have remarkably spread. As one of factors of the rapid spread of these portable terminals, the liquid crystal display devices mounted as their output displays can be mentioned, The reason is that liquid crystal display devices have the feature that they do not in principle require electric power for being driven and therefore are low power consumption display devices.

In recent years, in active matrix type display devices using polysilicon TFTs (thin film transistors) as switching elements of pixels, a tendency is to integrally form the digital interface drive circuit on the same substrate as the display area where the pixels are arranged in a matrix.
In such an integral drive circuit type display device, a horizontal drive system and a vertical drive system are arranged at a periphery (frame) of an effective display portion. These drive systems are integrally formed on the same substrate together with the pixel area using low temperature polysilicon TFTs.

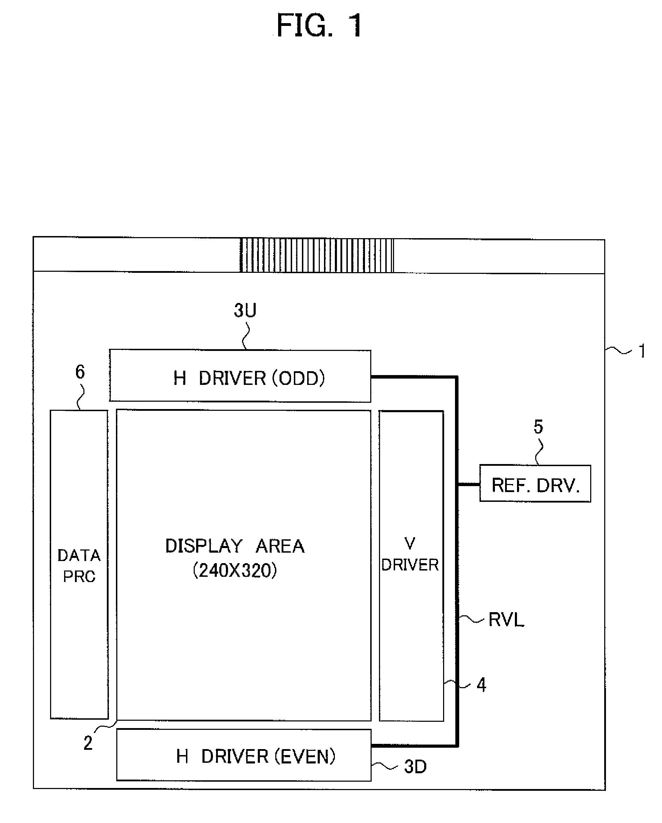

FIG. 1 is a diagram showing the schematic configuration of a general integral drive circuit type display device (see for example, Patent Document 1).

This liquid crystal display device, as shown in FIG. 1, is formed by a transparent insulating substrate, for example a glass substrate 1, on which an effective display portion 2 having a plurality of pixels including liquid crystal cells arranged in a matrix, a pair of horizontal drive circuits (H drivers) 3U and 3D arranged above and below the effective display portion 2 in FIG. 1, a vertical drive circuit (V driver) 4 arranged at a side portion of the effective display portion 2 in FIG. 1, one reference voltage generation circuit (REF.DRV) 5 for generating a plurality of reference voltages, a data processing circuit (DATAPRC) 6, etc. are integrated.

In this way, the integral drive circuit type display device of FIG. 1 has two horizontal drive circuits 3U and 3D arranged on the two sides (above and below in FIG. 1) of the effective pixel portion 2. This is in order to separately drive the data lines divided in odd number lines and even number lines.

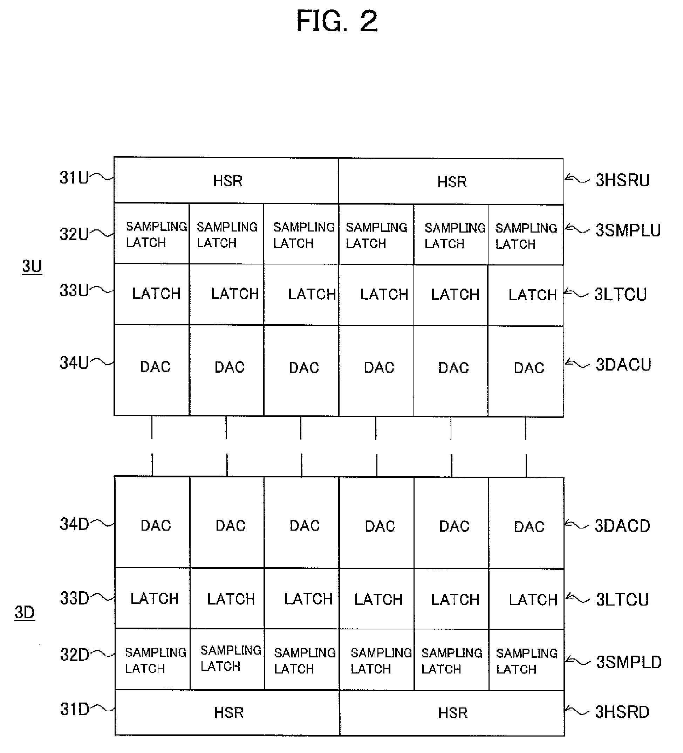

FIG. 2 is a block diagram showing an example of the configuration of the horizontal drive circuits 3U and 3D for separately driving odd number lines and even number lines.

As shown in FIG. 2, the horizontal drive circuit 3U for driving the odd number lines and the horizontal drive circuit 3D for driving the even number lines have the same configuration.
Specifically, they have shift register (HSR) groups 3HSRU and 3HSRD for sequentially outputting shift pulses (sampling pulses) from transfer stages in synchronization with horizontal transfer clocks HCK (not shown), sampling and latch circuit groups 3SMPLU and 3SMPLD for sequentially sampling and latching digital image data by sampling pulses given from shift registers 31U and 31D, linear sequencing latch circuit groups 3LTCU and 3LTCD for linearly sequencing latch data of sampling and latch circuits 33U and 33D, and digital/analog conversion circuit (DAC) groups 3DACU and 3DACD for converting digital image data linearly sequenced at the linear sequencing latch circuits 33U and 33D to analog image signals.
Note that, usually, at input stages of DAC 34U and DAC 34D, level shift circuits are arranged, and level up data are input to the DACs 34,
Patent Document 1: Japanese Patent Publication (A) No. 2002-175033

### DISCLOSURE OF THE INVENTION

### PROBLEM TO BE SOLVED BY THE INVENTION

However, in the horizontal drive circuit of FIG. 2 explained above, one set includes a sampling and latch circuit 32, a linearly sequencing latch circuit 33, and a DAC 34 and one set is needed for each data line, therefore the lateral width permitted in terms of layout is small. For this reason, reduction of the pitch is difficult. Further, the number of required circuits is large, therefore there are the disadvantages that the frame becomes large and the power consumption is big.
In the case of the horizontal drive circuit of FIG. 2, three sampling and latch circuits sampling serial-to-parallel converted R (red), G (green), and B (blue) data are needed. However, it is difficult to cope with demands for narrowing the pitch and narrowing the frame by this.
In order to overcome this, extension of the layout so-called in the vertical direction can be considered. However, the layout area abruptly increases by this and it is difficult to realize frame narrowing.

The present invention provides a display device of a type capable of narrowing the pitch, able to realize frame narrowing, and capable of further lowering the power consumption and an electronic device using the device.

### MEANS FOR SOLVING THE PROBLEMS

To attain the above object, a display device of a first aspect of the present invention has a display portion having pixels arranged in a matrix, a vertical drive circuit selecting pixels of the display portion in units of rows, and a horizontal drive circuit receiving as input first, second, and third digital image data, converting the digital image data to analog image signals, and supplying the signals to data lines to which pixels of a row selected by the vertical drive circuit are connected, wherein the horizontal drive circuit includes a first latch system including a first sampling and latch circuit sampling and latching the first digital image data, a second sampling and latch circuit sampling and latching the second digital image data, and a first latch circuit latching the latched data of the first and second sampling and latch circuits again, a second latch system including a third sampling and latch circuit sampling and latching the third digital image data, a digital-to-analog conversion circuit (DAC) converting the first, second, and third digital image data latched by the first latch system and the second latch system to analog data during one horizontal period, and a line selector selecting the first, second, and third analog image data converted to analog data by the DAC within a predetermined period in a time division manner and outputting these analog image data to the data lines,

Preferably, the first latch system has a second latch circuit latching the data latched by the first latch circuit, the second latch system has a third latch circuit latching the data latched by the third sampling and latch circuit again, and the device further has a selection switch selectively outputting the digital image data latched by the second latch circuit and the third latch circuit to the DAC.

Preferably, in the horizontal drive circuit, the first and second sampling and latch circuits are cascade connected, the horizontal drive circuit includes the first latch circuit and second latch circuit cascade connected with respect to the output of the second sampling and latch circuit, and the first and second sampling and latch circuits store first digital image data and second digital image data by the same sampling pulse, transfer the second digital image data of the second sampling and latch circuit through the first latch circuit to the second latch circuit, and next transfer the first digital image data of the first sampling and latch circuit through the second sampling and latch circuit to the second latch circuit.

Preferably, the third digital image data is data having an intermediate wavelength band among the three digital image data.

A second aspect of the present invention is an electronic device has a display device, wherein the display device has a display portion having pixels arranged in a matrix, a vertical drive circuit selecting pixels of the display portion in units of rows, and a horizontal drive circuit receiving as input first, second, and third digital image data, converting the digital image data to analog image signals, and supplying the signals to data lines to which pixels of the row selected by the vertical drive circuit are connected, in which the horizontal drive circuit includes a first latch system including a first sampling and latch circuit sampling and latching the first digital image data, a second sampling and latch circuit sampling and latching the second digital image data, and a first latch circuit latching the latched data of the first and second sampling and latch circuits again, a second latch system including a third sampling and latch circuit sampling and latching the third digital image data, a digital-to-analog conversion circuit (DAC) converting the first, second, and third digital image data latched by the first latch system and the second latch system to analog data during one horizontal period, and a line selector selecting the first, second, and third analog image data converted to analog data by the DAC within a predetermined period in a time division manner and outputting these analog image data to the data lines.

### EFFECTS OF THE INVENTION

According to the present invention, an integral drive circuit type display device capable of handling higher definitions with a narrow frame and having a low power consumption can be realized.

### BRIEF DESCRIPTION OF THE DRAWINGS

[FIG. 1] FIG. 1 is a diagram schematically showing the configuration of a general integral drive circuit type display device.
[FIG. 2] FIG. 2 is a block diagram showing an example of the configurations of the horizontal drive circuits of FIG. 1 separately driving odd number lines and even number lines.
[FIG. 3] FIG. 3 is a diagram showing the layout configuration of an integral drive circuit type display device according to a first embodiment of the present invention.
[FIG. 4] FIG. 4 is a system block diagram showing circuit functions of the integral drive circuit type display device according to the first embodiment of the present invention.
[FIG. 5] FIG. 5 is a circuit diagram showing an example of the configuration of an effective display portion of a liquid crystal display device.
[FIG. 6] FIG. 6 is a block diagram showing an example of the basic configurations of first and second horizontal drive circuits of the present embodiment.
[FIG. 7] FIG. 7 is a circuit diagram showing a concrete configuration of a first latch system of the horizontal drive circuit according to a second embodiment.
[FIG. 8] FIG. 8 is a circuit diagram showing a concrete configuration of a second latch system of the horizontal drive circuit according to the second embodiment.
[FIG. 9] FIG. 9 is a diagram showing relationships of up/down directional frame sizes and potential higher definition regions of an existing system and the system of the present invention when realizing the device of FIG. 3 and FIG. 4 by QVGA.
[FIG. 10] FIG. 10 is a diagram showing a layout configuration of an integral drive circuit type display device according to a third embodiment of the present invention,
[FIG. 11] FIG. 11 is a system block diagram showing the circuit functions of the integral drive circuit type display device according to the third embodiment of the present invention.
[FIG. 12] FIG. 12 is a diagram of an outer appearance schematically showing the configuration of a mobile phone as a mobile terminal device according to an embodiment of the present invention.

### EXPLANATION OF REFERENCE

10, 10A... liquid crystal display devices, 11... glass substrate, 12... effective display portion, 13... horizontal drive circuit, 13U... first horizontal drive circuit, 13D... second horizontal drive circuit, 13SMPL... sampling and latch circuit groups, 131... first sampling and latch circuit, 132... second sampling and latch circuit, 133... third sampling and latch circuit, 134... first latch circuit, 135... second latch circuit, 136... third latch circuit, 137... first latch system, 138... second latch system, 13OSEL... latch output selection switch, 13DAC... digital-to-analog conversion circuit, 13ABUD... analog buffer, 13LSEL... line selector, 14... vertical drive circuit, 15... data processing circuit, 16... power supply circuit, 17... interface circuit, and 18... timing generator.

### BEST MODE FOR CARRYING OUT THE INVENTION

Below, embodiments of the present invention will be explained in detail with reference to the drawings.

### <First Embodiment>

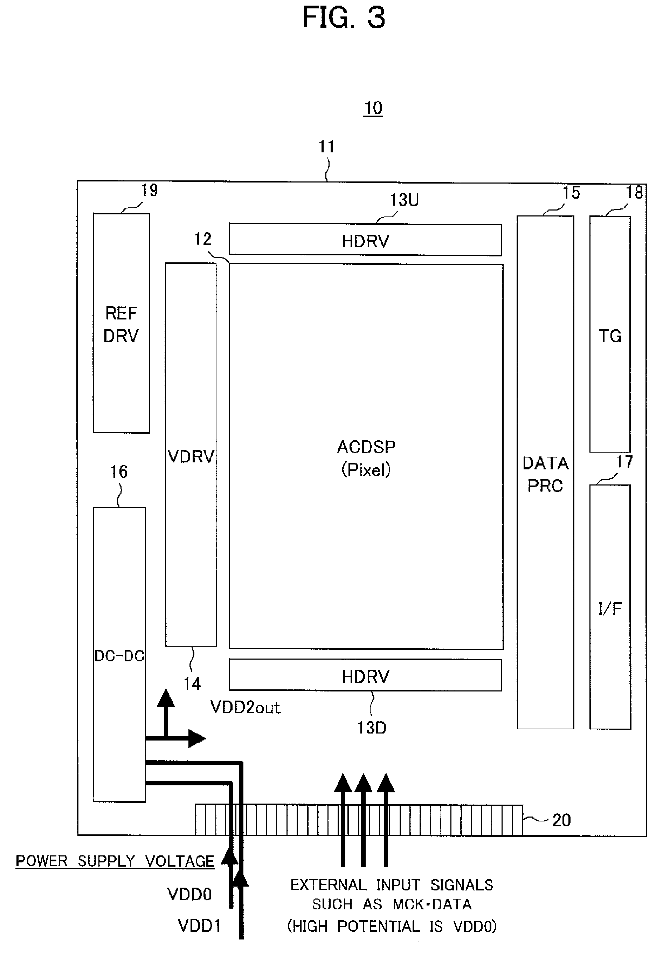

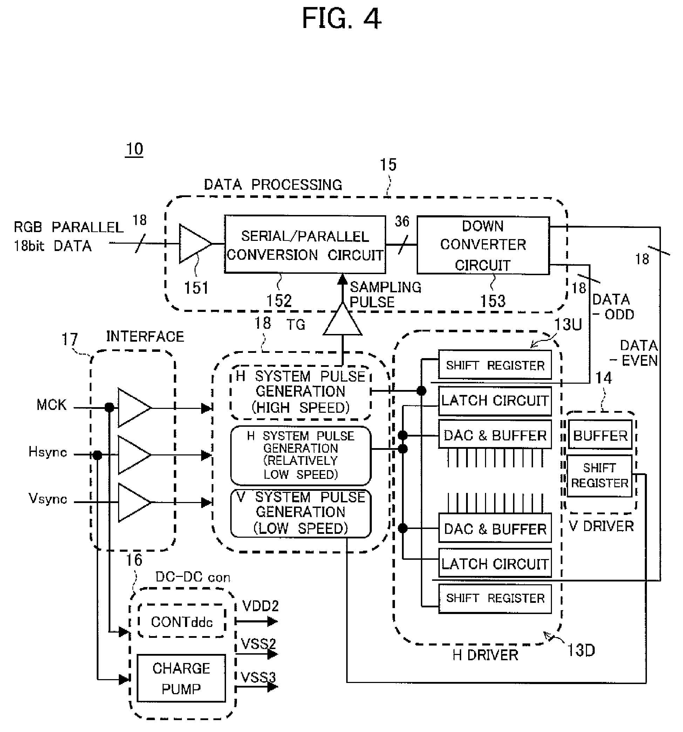

FIG. 3 and FIG. 4 are diagrams of configurations schematically showing an example of the configuration of an integral drive circuit type display device according to a first embodiment of the present invention, in which FIG. 3 is a diagram showing a layout configuration of the integral drive circuit type display device according to the first embodiment, and FIG. 4 is a system block diagram showing circuit functions of the integral drive circuit type display device according to the first embodiment of the present invention.
Here, for example, an explanation will be given by taking as an example a case where the present invention is applied to an active matrix type liquid crystal display device using liquid crystal cells as electro-optic elements of the pixels.

This liquid crystal display device 10, as shown in FIG. 3, is formed by a transparent insulating substrate, for example, a glass substrate 11, on which an effective display portion (ACDSP) 12 having a plurality of pixels including liquid crystal cells arranged in a matrix, a pair of first and second horizontal drive circuits (H drivers, HDRV) 13U and 13D arranged above and below the effective display portion 12 in FIG. 3, a vertical drive circuit (V driver, VDRV) 14 arranged at the side portion of the effective display portion 12 in FIG. 3, a data processing circuit (DATAPRC) 15, a power supply circuit (DC-DC) 16 formed by a DC-DC converter, an interface circuit (I/F) 17, a timing generator (TG) 18, and a reference voltage drive circuit (REFDRV) 19 supplying a plurality of drive reference voltages to the horizontal drive circuits 13U, 13D etc., and so on are integrated.
Further, an input pad 20 for data etc. is formed in an edge portion in the vicinity of the position of arrangement of the second horizontal drive circuit 13D of the glass substrate 11.

The glass substrate 11 is constituted by a first substrate having a plurality of pixel circuits including active elements (for example transistors) arranged in a matrix and a second substrate arranged facing this first substrate with a predetermined clearance. Further, a liquid crystal is sealed between these first and second substrates.
Circuit groups formed on the insulating substrate are formed by a low temperature polycrystalline silicon TFT process. Namely, in this integral drive circuit type display device 10, the horizontal drive systems and vertical drive system are arranged at the periphery (frame) of the effective display portion 12. These drive systems are integrally formed on the same substrate together with the pixel area portion by using polycrystalline silicon TFTs.

The integral drive circuit type display device 10 of the present embodiment arranges two horizontal drive circuits 13U and 13D on the two sides of (above and below in FIG. 3) the effective pixel portion 12. This arrangement is made for driving data lines while dividing these to odd number lines and even number lines.
The two horizontal drive circuits 13U and 13D employ an RGB selector scheme by storing three digital data in sampling and latch circuits, performing the conversion processing to analog data three times by the common digital-to-analog conversion circuit during one horizontal period (H), selecting three analog data in the horizontal period in a time division manner, and outputting the same to data lines (signal lines).
In the present embodiment, among the three digital image data R, G, and B, the digital R data will be explained as first digital data, the digital B data will be explained as second digital data, and the digital G data will be explained as third digital data.

Below, the configurations and functions of the components of the liquid crystal display device 10 of the present embodiment will be sequentially explained.

In the effective display portion 12, a plurality of pixels including liquid crystal cells are arrayed in a matrix.
Then, in the effective display portion 12, data lines and vertical scan lines driven by the horizontal drive circuits 13U and 13D and the vertical drive circuit 14 are laid in a matrix.

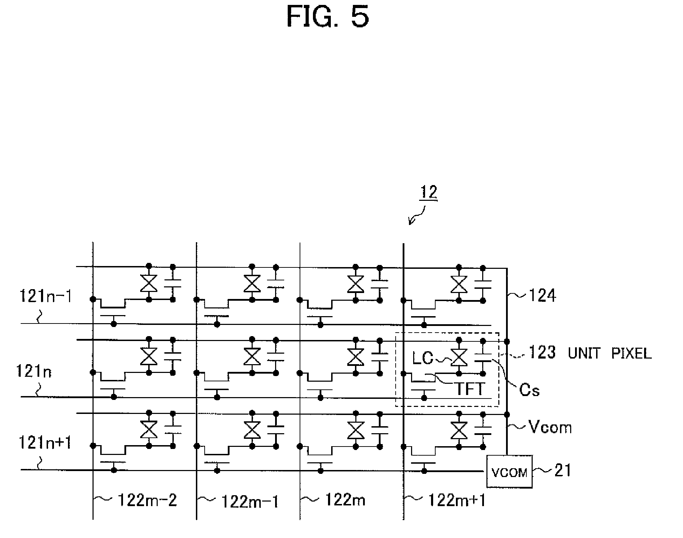

FIG. 5 is a diagram showing an example of the concrete configuration of the effective display portion 12.
Here, for simplification of the drawing, a case of a pixel array formed by three rows (n-1-th row to n+1-th row) and four columns (m-2-th column to m+1-th column) is employed and shown as an example.
In FIG. 4, in the display portion 12, vertical scan lines..., 121n-1, 121n, 121n+1,..., and data lines..., 122m-2, 122m-1, 122m, 122m+1,... are laid in a matrix, and unit pixels 123 are arranged at intersecting portions of these.

Each unit pixel 123 is configured by a thin film transistor TFT as the pixel transistor, a liquid crystal cell LC, and a storage capacitor Cs. Here, the liquid crystal cell LC means a capacity generated between a pixel electrode (one electrode) formed by the thin film transistor TFT and a counter electrode (other electrode) formed facing this.

Thin film transistors TFT are connected at their gate electrodes to vertical scan lines... , 121n-1, 121n, 121n+1,... and connected at their source electrodes to data lines... , 122m-2, 122m-1, 122m, 122m+1,....
The liquid crystal cell LC is connected at its pixel electrode to a drain electrode of the thin film transistor TFT and connected at its counter electrode to a common line 124. The storage capacitor Cs is connected between the drain electrode of the thin film transistor TFT and the common line 124.
The common line 124 is given a predetermined AC voltage as a common voltage Vcom by a VCOM circuit 21 integrally formed with the drive circuit etc. on the glass substrate 11.

Each of the first side ends of the vertical scan lines... , 121n-1, 121n, 121n+1,... is connected to each output end of the corresponding row of the vertical drive circuit 14 shown in FIG. 3.
The vertical drive circuit 14 is configured so as to include for example a shift register and performs a vertical scan by sequentially generating vertical selection pulses in synchronization with vertical transfer clocks VCK (not shown) and giving these to vertical scan lines... , 121-1, 121n, 121n+1,... .

Further, in the display portion 12, for example, each of first side ends of the data lines... , 122m-1, 122m+1,..., is connected to each output end of the corresponding column of the first horizontal drive circuit 13U shown in FIG. 3, and each of the other side ends is connected to each output end of the corresponding column of the second horizontal drive circuit 13D shown in FIG. 3.

The first horizontal drive circuit 13U stores three digital data of R data, B data, and G data in sampling and latch circuits, performs the processing for conversion to analog data three times in one horizontal period (H), selects three data in a time division manner within the horizontal period, and outputs the same to corresponding data lines.
The first horizontal drive circuit 13U, along with employment of this RGB selector scheme, transfers the R data and B data latched in the first and second sampling and latch circuits to the first latch circuit and further to the second latch circuit in a time division manner, transfers the G data latched in the third sampling and latch circuit during this time divisional transfer processing of the R data and B data to the latch circuits to the third latch circuit, selectively outputs the R, B, and G data latched in the second latch circuit and third latch circuit in one horizontal period and converts the same to analog data, and selects three analog data in a time division manner in the horizontal period and outputs the same to corresponding data lines.
Namely, in order to realize the RGB selector system, by configuring the horizontal drive circuit 13U of the present embodiment so that a first latch series for two digital data R and B and a second latch series for one digital G data are arranged in parallel and so that a digital-to-analog conversion circuit (DAC), an analog buffer, and a line selector after the selector are shared, a narrowing of the frame and lowering of the power consumption will be achieved.
The second horizontal drive circuit 13D basically has the same configuration as that of the first horizontal drive circuit 13U.

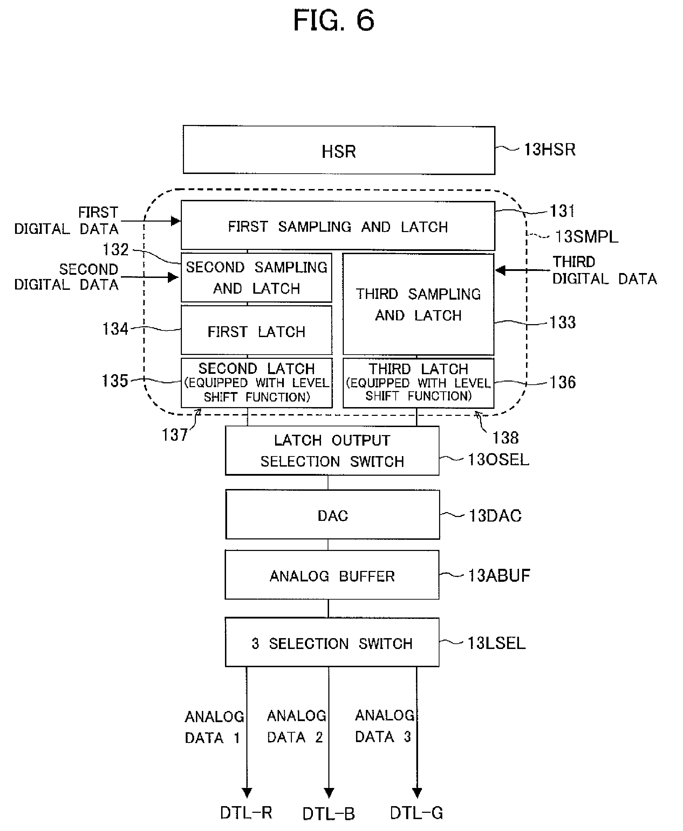

FIG. 6 is a block diagram showing an example of the fundamental configuration of the first horizontal drive circuit 13U and the second horizontal drive circuit 13D of the present embodiment. In the following description, these will be explained as "the horizontal drive circuit 13".
Note that this horizontal drive circuit exhibits a basic configuration corresponding to three digital data. In actuality, a plurality of same configurations are aligned in parallel.

The horizontal drive circuit 13, as shown in FIG. 6, has a shift register (HSR) group 13HSR, a sampling and latch circuit group 13SMPL, a latch output selection switch 130SEL, a digital-to-analog conversion circuit 13DAC, an analog buffer 13ABUF, and a line selector 13LSEL.

The shift register group 13HSR has a plurality of shift registers (HSR) sequentially outputting shift pulses (sampling pulses) to the sampling and latch circuit group 13SMPL from transfer stages corresponding to columns in synchronization with the horizontally transfer clocks HCK (not shown).

The sampling and latch circuit group 13SMPL has a first sampling and latch circuit 131 sequentially sampling and latching the R data as the first digital data, a second sampling and latch circuit 132 sequentially sampling and latching the B data as the second digital data, and latching the R data latched by the first sampling and latch circuit 131 at the predetermined timing, a third sampling and latch circuit 133 sequentially sampling and latching the G data as the third digital data, a first latch circuit 134 for serially transferring the digital data R or B data latched by the second sampling and latch circuit 132, a second latch circuit 135 having a level shift function of converting the digital R or B data latched by the first latch circuit 134 to a higher voltage amplitude and latching the same, and a third latch circuit 136 having a level shift function of converting the digital G data latched by the third sampling and latch circuit 133 to a higher voltage amplitude and latching the same.
In the sampling and latch circuit group 13SMPL having such a configuration, a first latch system 137 is formed by the first sampling and latch circuit 131, second sampling and latch circuit 132, first latch circuit 134, and second latch circuit 135, and a second latch system 138 is formed by the third sampling and latch circuit 133 and third latch circuit 136.

In the present embodiment, the data input from the data processing circuit 15 to the horizontal drive circuits 13U and 13D are supplied at a level of a 0-3V (2.9V) system.
Then, by the level shift functions of the second and third latch circuits 135 and 136 serving as output stages of the sampling and latch circuit group 13SMPL, these are raised in level to for example a -2.3V to 4.8V system.

The latch output selection switch 13OSEL selectively switches outputs of the sampling and latch circuit group 13SMPL and outputs the result to the digital-to-analog circuit 13DAC.
The digital-to-analog conversion circuit 13DAC performs digital-to-analog conversion three times during one horizontal period. Namely, the digital-to-analog conversion circuit 13DAC converts three digital data R, B, and G to the analog data in one horizontal period.
The analog buffer 13ABUF buffers the R, B, and G data converted to analog signals at the digital-to-analog conversion circuit 13DAC and outputs the same to the line selector 13LSEL,
The line selector 13LSEL selects three analog data R, B, and G in one horizontal period and outputs the same to the corresponding data lines DTL-R, DTL-B, and DTL-G.

Here, the operation in the horizontal drive circuit 13 will be explained.

When the horizontal drive circuit 13 samples successive image data, it stores these in the first, second, and third sampling and latch circuits 131, 132, and 133.
When storage of all data of one line in the horizontal direction in the first, second, and third sampling and latch circuits 131 to 133 is complected, the data in the second sampling and latch circuit 132 is transferred to the first latch circuit 134 in a horizontal direction blanking period and immediately transferred to the second latch circuit 135 for storage.
Next, the data in the first sampling and latch circuit 131 is transferred to the second sampling and latch circuit 132 and immediately transferred to the first latch circuit 134 for storage. Further, in the same period, the data in the third sampling and latch circuit 133 is transferred to the third latch circuit 136.
Then, the data of the next line in the horizontal direction are stored in the first, second, and third sampling and latch circuits 131, 132, and 133.
During the storage of the data of the next line in the horizontal direction, the data stored in the second latch circuit 135 and third latch circuit 136 are output to the digital-to-analog conversion circuit 13DAC by switching of the latch output selection switch 13OSEL.
After that, the data stored in the first latch circuit 134 is transferred to the second latch circuit 135 and stored. That data is output to the digital-to-analog conversion circuit 13DAC by the switching of the latch output selection switch 13OSEL.
By this sampling and latch scheme, three digital data are output to the digital-to-analog conversion circuit 13DAC, therefore it becomes possible to realize higher definition and frame narrowing.
Further, it is good from VT characteristic etc. of the liquid crystal that the third digital data is not accompanied by transfer work during the storage of the data of one line in the horizontal direction and the data are written in an order of B (Blue) → G (Green) → R (Red) in the case of the RGB selector drive. Therefore, by selecting data of a color apt to give the most influence upon the human eye, that is G data, this device becomes strong against fluctuations in image quality.

The data processing circuit 15 has a level shifter 151 shifting levels of the parallel digital data R, G, and B input from the outside from the 0-3V (2.9V) system to a 6V system, a serial-to-parallel conversion circuit 152 converting the level shifted R, G, and B data from the serial data to parallel data for phase adjustment or lowering frequencies, and a down converter 153 down shifting the parallel data from the 6V system to the 0-3V (2.9V) system, outputting odd number data (odd-data) to the horizontal drive circuit 13U, and outputting even number data (even-data) to the horizontal drive circuit 13D.

The power supply circuit 16 includes a DC-DC converter, supplied with a liquid crystal voltage VDD1 (for example 2.9V) from for example the outside, boosts up this voltage to an internal panel voltage VDD2 of the double 6V system (for example 5.8V) in synchronization with a master clock MCK and horizontal synchronization signal Hsync supplied from the interface circuit 17, or based on correction clocks obtained by correcting clocks having low (slow) frequencies and having a variation in oscillation frequencies by a predetermined correction system by a built-in oscillation circuit and the horizontal synchronization signal Hsync, and supplies the same to circuits inside the panel.
Further, the power supply circuit 16 generates, as internal panel voltages, VSS2 (for example -1.9V) and VSS3 (for example -3.8V) as negative voltages and supplies the same to predetermined circuits (interface circuit etc.) inside the panel.

The interface circuit 17 level shifts levels of the master clock MCK, horizontal synchronization signal Hsync, and vertical synchronization signal Vsync supplied from the outside up to a panel internal logic level (for example VDD2 level), supplies the master clock MCK, horizontal synchronization signal Hsync, and vertical synchronization signal Vsync after the level shift to the timing generator 18, and supplies the horizontal synchronization signal Hsync to the power supply circuit 16.
The interface circuit 17 can be configured not to supply the master clock MCK to the power supply circuit 16 in a case where the power supply circuit 16 has a configuration performing the boosting based on correction clocks obtained by correcting clocks of the built-in oscillation circuit without using the master clock. Alternatively, it is also possible to configure the device to keep the supply line of the master clock MCK from the interface circuit 17 to the power supply circuit 16 as it is, but not to use the master clock MCK for boosting on the power supply circuit 16 side.

The timing generator 18, in synchronization with the master clock MCK, horizontal synchronization signal Hsync, and vertical synchronization signal Vsync supplied by the interface circuit 17, generates a horizontal start pulse HST and a horizontal clock pulse HCK (HCKX) used as clocks of the horizontal drive circuits 13U and 13D and a vertical start pulse VST and a vertical clock VCK (VCKX) used as clocks of the vertical drive circuit 14, supplies the horizontal start pulse HST and horizontal clock pulse HCK (HCKX) to the horizontal drive circuits 13U and 13D, and supplies the vertical start pulse VST and vertical clock VCK (VCKX) to the vertical drive circuit 14,

Next, the operation according to the above configuration will be explained.

The parallel digital data input from the outside are subjected to the parallel conversion for phase adjustment or lowering the frequencies at the data processing circuit 15 on the glass substrate 11, and the R data, B data, and G data are output to the first and second horizontal drive circuits 13U and 13D.
In the first and second horizontal drive circuits 13U and 13D, the digital G data input from the data processing circuit 15 are sequentially sampled and latched for 1H at the third sampling and latch circuit 133. After that, these are transferred to the third latch circuit 136 in the horizontal blanking period.
Parallel to this, the R data and B data are separately sampled for 1H and held in the first and second sampling and latch circuits 131 and 132 and transferred to the first latch circuit 134 in the next horizontal blanking period.
When the storage of all data of one line in the horizontal direction in the first, second, and third sampling and latch circuits 131 to 133 is completed, the data in the second sampling and latch circuit 132 is transferred to the first latch circuit 134 in the horizontal direction blanking period and immediately transferred to the second latch circuit 135 and stored.
Next, the data in the first sampling and latch circuit 131 is transferred to the second sampling and latch circuit 132, immediately transferred to the first latch circuit 134, and stored. Further, in the same period, the data in the third sampling and latch circuit 133 is transferred to the third latch circuit 136.
Then, the data of the next line in the horizontal direction are stored in the first, second, and third sampling and latch circuits 131, 132, and 133.
During the storage of the data of the next line in the horizontal direction, the data stored in the second latch circuit 135 and third latch circuit 136 are output to the digital-to-analog conversion circuit 13DAC by the switching of the latch output selection switch 13OSEL.
After that, the data stored in the first latch circuit 134 is transferred to the second latch circuit 135 and stored. That data is output to the digital-to-analog conversion circuit 13DAC by the switching of the latch output selection switch 13OSEL.
In the next 1H period, the R, B, and G data converted to the analog data at the digital-to-analog conversion circuit 13DAC are held in the analog buffer 13ABUF, and the analog R, B, and G data are selectively output to the corresponding data lines in a form where the 1H period is divided to three.
Note that the processing of the G, R, and B can be realized even when their orders are switched.

According to the present embodiment, the device has the first latch system 137 cascade connecting the sampling and latch circuits 131 and 132, first latch circuit 134, and second latch circuit 135 for the first digital data (R) and the second digital data (B) and sequentially transferring the data and the second latch system 138 cascade connecting the sampling and latch circuit 133 and third latch circuit 136 for the third digital data and has the common digital-to-analog (DA) conversion circuit 13DAC, analog buffer circuit 13ABUF, and line selector 13LSEL selectively outputting three analog data (R, B, G) to corresponding data lines during one horizontal period (H), therefore the following effects can be obtained.
By employing this configuration, the number of the DA conversion circuits/analog buffer circuits which become necessary is decreased compared with the existing system at the same dot pitch, and it becomes possible to realize narrowing of the frame.
Further, by configuring the data processing circuit from the first and second digital data use and third digital data use sampling and latch circuits, it becomes possible to realize higher definition.
Namely, according to the present system, a three-line selector system achieving higher definition and narrowing of the frame, and the integral drive circuit type display device using this can be realized on the insulating substrate.
Further, the number of circuits of the horizontal drive circuits can be decreased, therefore a low power consuming three-line selector system and an integral drive circuit type display device using this can be realized.
Further, a three-line selector system which operates at a high speed since it divides data to three and outputs the data to the signal lines during one horizontal period, but is strong against variations in the image quality and an integral drive circuit type display device using this can be realized.

### <Second Embodiment>

Next, more preferred configurations of the first and second horizontal drive circuits in the integral drive circuit type display device according to the present invention will be explained as a second embodiment.

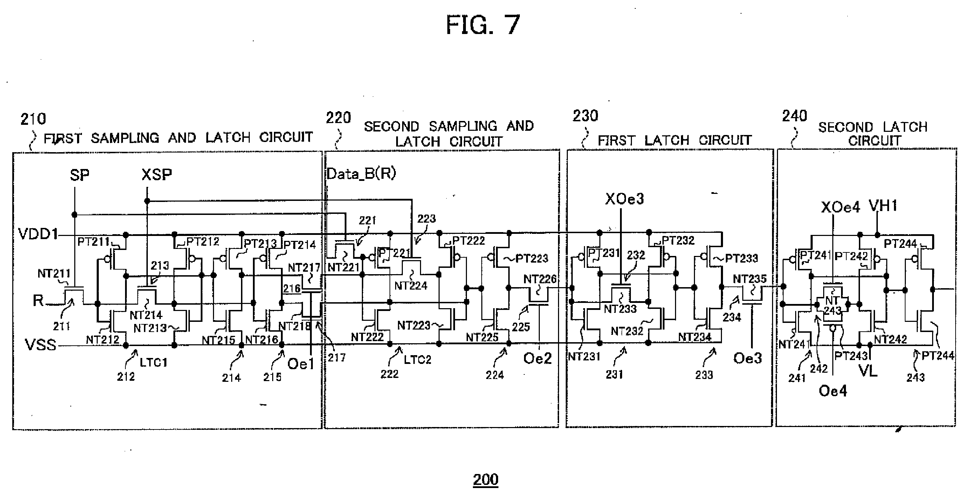

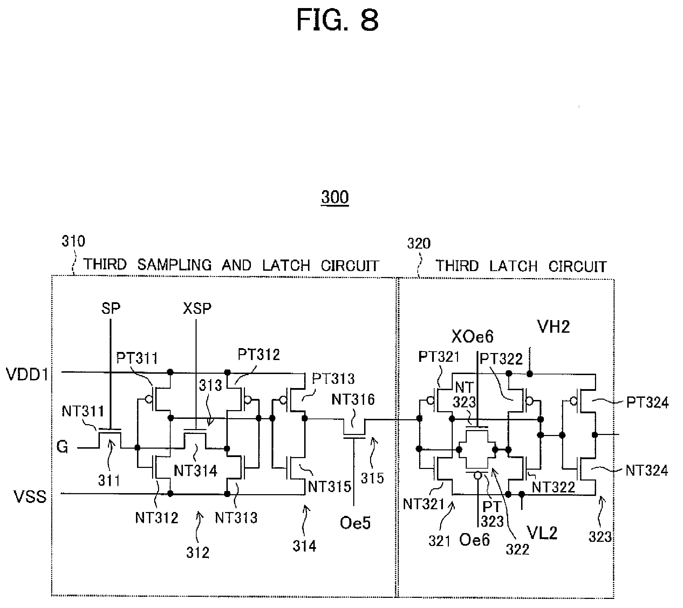

FIG. 7 is a circuit diagram showing a concrete configuration of a first latch system of the horizontal drive circuit according to the second embodiment. Further, FIG. 8 is a circuit diagram showing a concrete configuration of a second latch system of the horizontal drive circuit according to the second embodiment.

In FIG. 7, the first latch system 137 of FIG. 6 is indicated by notation 200, the first sampling and latch circuit 131 is indicated by notation 210, the second sampling and latch circuit 132 is indicated by notation 220, the first latch circuit 134 is indicated by notation 230, and the second latch circuit 135 is indicated by notation 240.
Further, in FIG. 8, the second latch system 138 of FIG. 6 is indicated by notation 300, the third sampling and latch circuit 133 is indicated by notation 310, and the third latch circuit 136 is indicated by notation 320.

The circuit of FIG. 7 is configured by the first sampling and latch circuit 210 latching the first digital R data by a sampling pulse SP from a not shown shift register, the second sampling and latch circuit 220 latching the second digital B data by the same sampling pulse SP, the first latch circuit 230 transferring the digital R data and B data all together after that, and the second latch circuit 240 performing the level shift of the transferred digital data.
The not shown shift register, first sampling and latch circuit 210, second sampling and latch circuit 220, and first latch circuit 230 perform the transfer and holding operation by the first power supply voltage VDD1 (VSS) of the 0-3V (2.9V) system, and the second latch circuit 240 performs the holding and data output operations by a change of voltages to the second power supply voltages VH1 and VL1 of for example a -12.3 to 5.8V system.
Note that, the R and B data use output circuit of the sampling and latch circuit group is configured by the first latch and second latch.

The first sampling and latch circuit 210 includes n-channel transistors NT211 to NT218 and p-channel transistors PT211 to PT214.
The transistor NT211 configures an input transfer gate 211 of the R data to the gate of which the sampling pulse SP is supplied.
A latch 212 is configured by cross connecting inputs and outputs of CMOS inverters configured by the transistors PT211 and NT212 and the transistors PT212 and NT213. Further, an inverted signal XSP of the sampling pulse is supplied to the gate of the transistor NT214, whereby an equalizer circuit 213 of the latch 212 is configured.
An output buffer 214 formed by a CMOS inverter is configured by the transistors PT213 and NT215.
An output buffer 215 formed by a CMOS inverter is configured by the transistors PT214 and NT216.
Then, a signal Oe1 is supplied to the gate of the transistor NT217, whereby an output transfer gate 216 to the second sampling and latch circuit 220 of the output buffer 214 is configured, and the signal Oe1 is supplied to the gate of the transistor NT218, whereby an output transfer gate 217 to the second sampling and latch circuit 220 of the output buffer 215 is configured,

The second sampling and latch circuit 220 includes n-channel transistors NT221 to NT226 and p-channel transistors PT221 to PT223.
The transistor NT221 configures an input transfer gate 221 of the B data to the gate of which the sampling pulse SP is supplied.
A latch 222 is configured by cross connecting inputs and outputs of CMOS inverters configured by the transistors PT221 and NT222 and the transistors PT222 and NT223. Further, the inverted signal XSP of the sampling pulse is supplied to the gate of the transistor NT224, whereby an equalizer circuit 223 of the latch 222 is configured.
An output buffer 224 formed by a CMOS inverter is configured by the transistors PT223 and NT225.
Then, a signal Oe2 is supplied to the gate of the transistor NT226, whereby an output transfer gate 216 to the first latch circuit 230 of the output buffer 224 is configured.

The first latch circuit 230 includes n-channel transistors NT231 to NT235 and p-channel transistors PT231 to PT233.
A latch 231 is configured by cross connecting inputs and outputs of CMOS inverters configured by the transistors PT231 and NT231 and the transistors PT232 and NT232. Further, an inverted signal XOe3 of a signal Oe3 is supplied to the gate of the transistor NT233, whereby an equalizer circuit 232 of the latch 231 is configured.
An output buffer 233 formed by a CMOS inverter is configured by the transistors PT233 and NT234.
Then, the signal Oe3 is supplied to the gate of the transistor NT235, whereby an output transfer gate 234 to the second latch circuit 240 of the output buffer 233 is configured.

The second latch circuit 240 includes n-channel transistors NT241 to NT244 and p-channel transistors PT241 to PT244.
A latch 241 is configured by cross connecting inputs and outputs of CMOS inverters configured by the transistors PT241 and NT241 and the transistors PT242 and NT242. Further, a signal XOe4 is supplied to the gate of the transistor NT243 and a signal Oe4 is supplied to the gate of the transistor PT243, whereby an equalizer circuit 242 of the latch 241 is configured.
An output buffer 243 formed by a CMOS inverter is configured by the transistors PT244 and NT244.
This second latch circuit 240 operates by the supply of voltages VH1 and VL1 as the second power supply voltage system.

In the circuit of FIG. 7, when sampling successive image data, the image data (R data or B data) existing in the first sampling and latch circuit 210 are stored in a CMOS latch cell 212. Simultaneously with that, image data (B data or R data) of the second sampling and latch circuit 220 which is different from the above data is stored in a CMOS latch cell 222.
When the storage of all data of one line in the horizontal direction into the first sampling and latch circuit 210 and second sampling and latch circuit 220 is completed, the data of the CMOS latch cell 222 in the second sampling and latch circuit 220 is transferred to the first latch circuit 230 in the horizontal direction blanking period and immediately stored in the second latch circuit 240. At this time, the CMOS latch 231 structure is released so that the first latch circuit 230 does not hold the data.
When the transfer of the data in the second sampling and latch circuit 220 to the second latch circuit 230 ends, the data stored in the first sampling and latch circuit 210 is transferred to the second sampling and latch circuit 220 next and immediately stored in the first latch circuit 230.
During the period where the data of the next line in the horizontal direction is stored in the first sampling and latch circuit 210 and second sampling and latch circuit 220, the first data stored in the second latch circuit 240 is output to the selection switch. When the transfer of the first data to the selection switch ends, the second data stored in the first latch circuit 230 is input to the selection switch,

Two digital data are operated by one sampling and latch circuit according to this sampling and latch scheme, therefore reduction of the Hdot pitch can be realized, which enables high resolution.

The third sampling and latch circuit 310 includes n-channel transistors NT311 to NT316 and p-channel transistors PT311 to PT313,
The transistor NT311 configures an input transfer gate 311 of the G data to the gate of which the sampling pulse SP is supplied.
A latch 312 is configured by cross connecting inputs and outputs of CMOS inverters configured by the transistors PT311 and NT312 and the transistors PT312 and NT313. Further, the inverted signal XSP of the sampling pulse is supplied to the gate of the transistor NT314, whereby an equalizer circuit 313 of the latch 312 is configured.
An output buffer 314 formed by a CMOS inverter is configured by the transistors PT313 and NT315.
Then, a signal Oe5 is supplied to the gate of the transistor NT316, whereby an output transfer gate 315 to the third latch circuit 320 of the output buffer 314 is configured.

The third latch circuit 320 includes n-channel transistors NT321 to NT324 and p-channel transistors PT321 to PT324.
A latch 321 is configured by cross connecting inputs and outputs of CMOS inverters configured by the transistors PT321 and NT321 and the transistors PT322 and NT322. Further, a signal XOe6 is supplied to the gate of the transistor NT323 and a signal Oe6 is supplied to the gate of the transistor PT323, whereby an equalizer circuit 322 of the latch 321 is configured.
An output buffer 323 formed by a CMOS inverter is configured by the transistors PT324 and NT324.
This third latch circuit 320 operates by the supply of voltages VH2 and VL2 as the second power supply voltage system.

In the circuit of FIG. 8, when sampling successive image data, the image data (G data) are sampled to the third sampling and latch circuit 310 and stored in a CMOS latch cell 312.
When the storage of the data of one line in the horizontal direction into the third sampling and latch circuit 310 is completed, the data of the CMOS latch cell 312 in the first sampling and latch circuit 310 is transferred to the third latch circuit 320 in the horizontal direction blanking period.
During the period where the data of the next line in the horizontal direction is stored in the third sampling and latch circuit 310, the data stored in the third latch circuit 320 is output to the selection switch.

By this circuit configuration, the number of sampling and latch circuits required for sampling data is decreased from the existing system. This contributes to reduction of the Hdot pitch. Further, the change from the existing type sampling and latch circuit to the new sampling and latch circuit makes reduction of power consumption possible.

Namely, in the existing system, the horizontal drive circuit needs Hdot number x 3 (RGB) sampling and latch circuits, DACs, and analog buffers or needs Hdot number x 2 sampling and latch circuits, DACs, and analog buffers. Therefore, this became an obstacle for realization of reduction of the pitch.
Contrary to this, in the present embodiment, three image data are processed by one sampling and latch circuit group, latch output selection switch, DA conversion circuit, analog buffer, and 3-selection switch. Therefore, when these are arranged above (or below) the display area, one horizontal drive circuit may be arranged for two Hdot pitches. At this time, another horizontal drive circuit is arranged on an opposite side, therefore the higher definition and narrower frame can be realized. Further, the number of circuits can be decreased can be less than the existing circuits, therefore it is possible to suppress the power consumption.

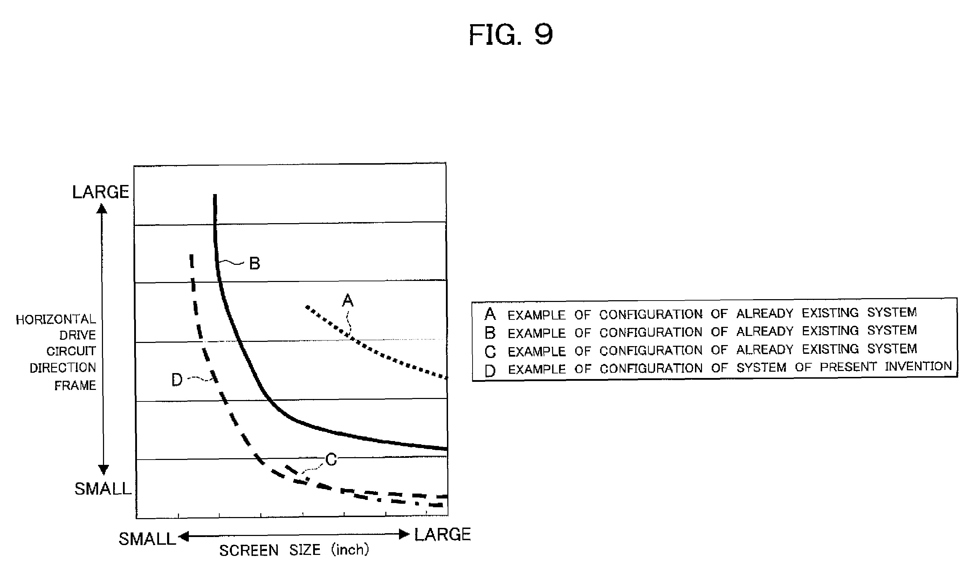

FIG. 9 is a diagram showing the relationships of up/down direction frame sizes and potential higher definition regions of the existing system and the system of the present invention when realizing the device of FIG. 3 and FIG. 4 by QVGA.
As seen from FIG. 9, in the system of the present invention, in comparison with the existing system, a three-line selector system achieving higher definition and narrower frame and an integral drive circuit type display device using this can be realized on an insulating substrate.

### <Third Embodiment>

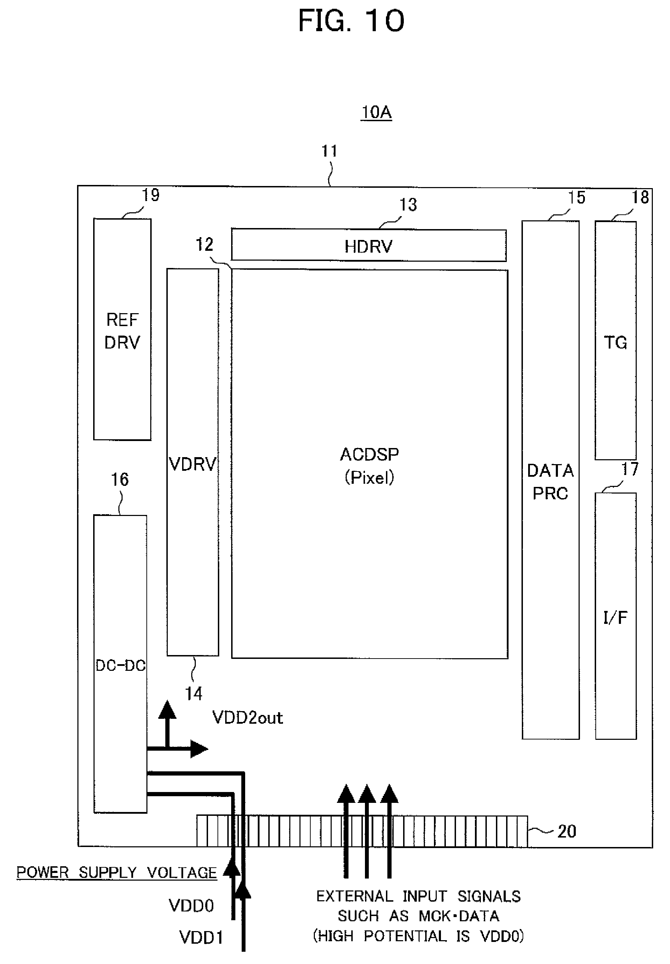

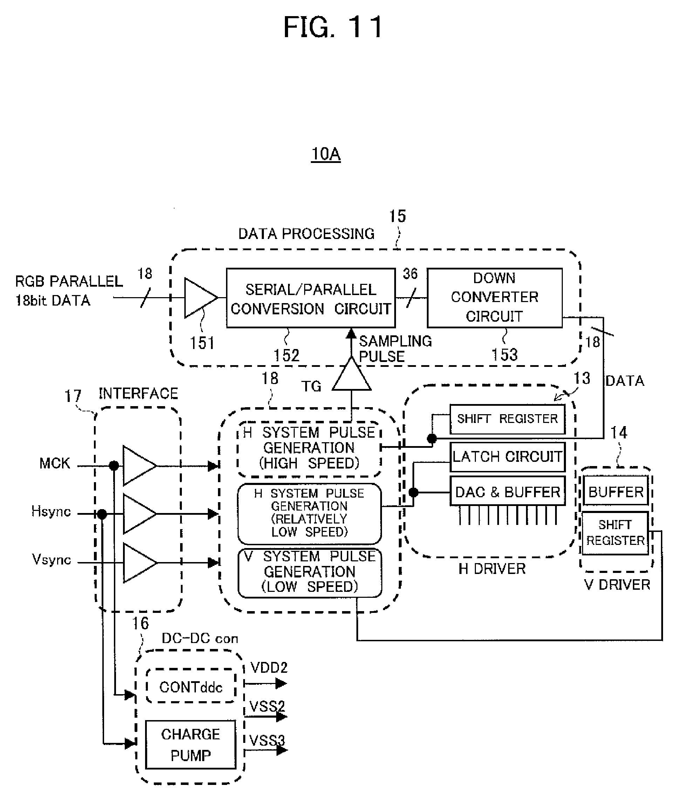

FIG. 10 and FIG. 11 are diagrams schematically showing an example of the configuration of an integral drive circuit type display device according to a third embodiment of the present invention, in which FIG. 10 is a diagram showing a layout configuration of the integral drive circuit type display device according to the present third embodiment, and FIG. 11 is a system block diagram showing the circuit functions of the integral drive circuit type display device according to the third embodiment.

The difference of the third embodiment from the first and second embodiments explained above resides in that the integral drive circuit type display device is realized by arranging a horizontal drive circuit on only one side.
When employing this scheme, the pitch of the number of Hdots which can be arranged becomes halved. Therefore, higher definition can not be achieved in comparison with FIG. 3 and FIG. 4, but it is possible to realize narrowing of the area of the side where a horizontal drive circuit is not arranged.

Note that, in the above embodiments, an explanation was given by taking as an example the case where the present invention was applied to an active matrix type liquid crystal display device, but the present invention is not limited to this. The present invention can be applied to an EL display device or other active matrix type display device using electroluminescence (EL) elements as electro-optic elements of the pixels in the same way as well.

Further, the active matrix type display device represented by the active matrix type liquid crystal display device according to the above embodiments is preferred particularly when used as the display portions of mobile phones, PDAs, or other mobile terminal devices in which reduced size and greater compactness of the device body are advanced in addition to application to displays of personal computers, word processors, and other OA apparatuses, television receivers, etc.

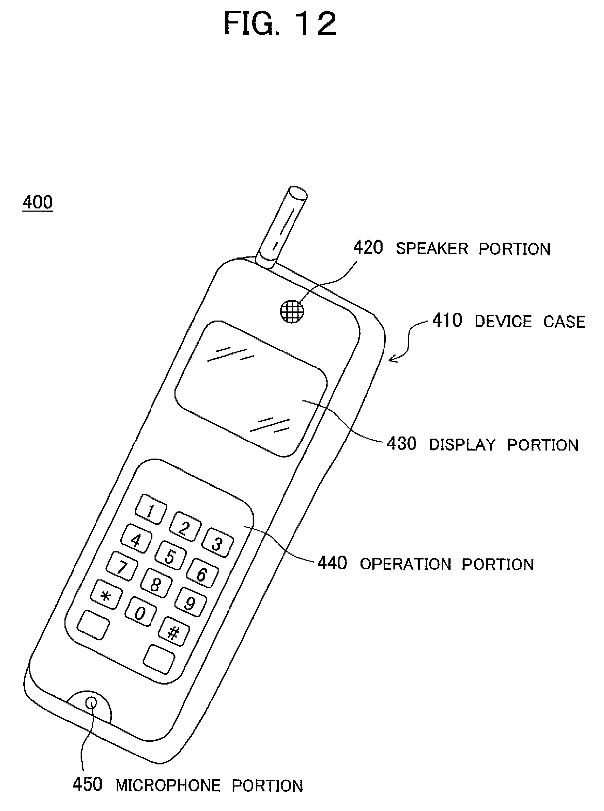

FIG. 12 is a view of the appearance schematically showing the configuration of a mobile terminal device to which the present invention is applied, for example, a mobile phone.

A mobile phone 400 according to the present example is configured by a speaker portion 420, a display portion 430, an operation portion 440, and a microphone portion 450 arranged on a front surface side of a device case 410 in order from an upper portion side.
In a mobile phone having such a configuration, for example a liquid crystal display device is used for the display portion 430. As this liquid crystal display device, used as this liquid crystal display device is the active matrix type liquid crystal display device according to the previously explained embodiment.

In this way, in the mobile phone or other mobile terminal device, by using the active matrix type liquid crystal display device according to the previously explained embodiment as the display portion 430, in circuits mounted on this liquid crystal display device, pitch narrowing is possible, frame narrowing can be realized, and reduction of the power consumption of the display device can be achieved and accordingly reduction of the power consumption of the terminal device becomes possible.

### INDUSTRIAL APPLICABILITY

In the display device and electronic device of the present invention, pitch narrowing is possible, frame narrowing can be realized, and further lowering of power consumption is possible. Therefore, in addition to the use as displays of personal computers, word processors, and other OA apparatuses, television receivers, etc., these can be applied particularly as the display portions of mobile phones, PDAs, or other mobile terminal devices in which reduction of size and greater compactness of the device body is advanced.

## Claims

1. A display device, comprising:
a display portion having pixels arranged in a matrix,
a vertical drive circuit selecting pixels of the display portion in units of rows, and
a horizontal drive circuit receiving as input first, second, and third digital image data, converting the digital image data to analog image signals, and supplying the signals to data lines to which pixels of a row selected by the vertical drive circuit are connected, wherein:
the horizontal drive circuit includes
a first latch system including a first sampling and latch circuit sampling and latching the first digital image data, a second sampling and latch circuit sampling and latching the second digital image data, and a first latch circuit latching the latched data of the first and second sampling and latch circuits again,
a second latch system including a third sampling and latch circuit sampling and latching the third digital image data,
a digital-to-analog conversion circuit (DAC) converting the first, second, and third digital image data latched by the first latch system and the second latch system to analog data during one horizontal period, and
a line selector selecting the first, second, and third analog image data converted to analog data by the DAC within a predetermined period in a time division manner and outputting these analog image data to the data lines.

2. A display device as set forth in claim 1, wherein
the first latch system has a second latch circuit latching the data latched by the first latch circuit,
the second latch system has a third latch circuit latching the data latched by the third sampling and latch circuit again, and
the device further comprises a selection switch selectively outputting the digital image data latched by the second latch circuit and the third latch circuit to the DAC.

3. A display device as set forth in claim 2, wherein
in the horizontal drive circuit, the first and second sampling and latch circuits are cascade connected,
the horizontal drive circuit includes the first latch circuit and second latch circuit cascade connected with respect to the output of the second sampling and latch circuit, and
the first and second sampling and latch circuits store first digital image data and second digital image data by the same sampling pulse,
transfer the second digital image data of the second sampling and latch circuit through the first latch circuit to the second latch circuit, and next transfer the first digital image data of the first sampling and latch circuit through the second sampling and latch circuit to the second latch circuit.

4. A display device as set forth in claim 1, wherein:
the horizontal drive circuit does not perform transfer processing of the third digital image data during a term where data of one line in the horizontal direction is stored.

5. A display device as set forth in claim 3, wherein:
the horizontal drive circuit does not perform transfer processing of the third digital image data during a term where data of one line in the horizontal direction is stored.

6. A display device as set forth in claim 1, wherein the third digital image data is data having an intermediate wavelength band among the three digital image data.

7. An electronic device comprising a display device, wherein
the display device comprises
a display portion having pixels arranged in a matrix,
a vertical drive circuit selecting pixels of the display portion in units of rows, and
a horizontal drive circuit receiving as input first, second, and third digital image data, converting the digital image data to analog image signals, and supplying the signals to data lines to which pixels of the row selected by the vertical drive circuit are connected, in which
the horizontal drive circuit includes
a first latch system including a first sampling and latch circuit sampling and latching the first digital image data, a second sampling and latch circuit sampling and latching the second digital image data, and a first latch circuit latching the latched data of the first and second sampling and latch circuits again,
a second latch system including a third sampling and latch circuit sampling and latching the third digital image data,
a digital-to-analog conversion circuit (DAC) converting the first, second, and third digital image data latched by the first latch system and the second latch system to analog data during one horizontal period, and
a line selector selecting the first, second, and third analog image data converted to analog data by the DAC within a predetermined period in a time division manner and outputting these analog image data to the data lines.

8. An electronic device as set forth in claim 7, wherein:
the first latch system has a second latch circuit latching the data latched by the first latch circuit,
the second latch system has a third latch circuit latching the data latched by the third sampling and latch circuit again, and
the device further comprises a selection switch selectively outputting digital image data latched by the second latch circuit and the third latch circuit to the DAC.

9. An electronic device as set forth in claim 8, wherein:
in the horizontal drive circuit, the first and second sampling and latch circuits are cascade connected,
the horizontal drive circuit includes the first latch circuit and the second latch circuit cascade connected with respect to the output of the second sampling and latch circuit,
the first and second sampling and latch circuits store the first digital image data and the second digital image data by the same sampling pulse,
the second digital image data of the second sampling and latch circuit is transferred through the first latch circuit to the second latch circuit, and next, the first digital image data of the first sampling and latch circuit is transferred through the second sampling and latch circuit to the second latch circuit.

10. An electronic device as set forth in claim 7, wherein:
the horizontal drive circuit does not perform transfer processing of the third digital image data during the period where data of one line in the horizontal direction is stored.

11. An electronic device as set forth in claim 9, wherein:
the horizontal drive circuit does not perform transfer processing of the third digital image data during the period where data of one line in the horizontal direction is stored.

12. An electronic device as set forth in claim 7, wherein:
wherein the third digital image data is data having an intermediate wavelength band among the three digital image data.
